# EUROPÄISCHE PATENTSCHRIFT

(11) **EP 2 546 546 B1**
(45) Veröffentlichungstag und Bekanntmachung des Hinweises auf die Patenterteilung: **14.10.2015**
(21) Anmeldenummer: 12176058.1
(22) Anmeldetag: 12.07.2012
(51) Int. Cl.: F16G 13/16, H02G 3/04

(54) **Vorrichtung zur Führung von Versorgungsleitungen**
Device for guiding supply lines
Dispositif destiné au guidage de câbles d'alimentation

(30) Priorität: 13.07.2011 DE 102011107680
(43) Veröffentlichungstag der Anmeldung: 16.01.2013
(73) Patentinhaber: Murrplastik Systemtechnik GmbH, 71570 Oppenweiler (DE)
(72) Erfinder: Bier, Klaus-Dieter, Dr., 71397 Leutenbach (DE); Goosens, Filip, 71522 Backnang (DE)
(74) Vertreter: Reule, Hanspeter

(56) Entgegenhaltungen:
- WO-A1-2005/048432
- WO-A1-2007/065422
- WO-A2-2010/119106
- DE-A1-102008 018 645
- FR-A- 1 345 760
- US-A- 3 643 195

## Beschreibung

Die Erfindung betrifft eine Vorrichtung zur Führung von Versorgungsleitungen gemäß Oberbegriff des Anspruchs 1.

Solche Vorrichtungen kommen dann zur Anwendung, wenn eine vertikal bewegliche Maschine über die Versorgungsleitungen mit Strom, Druckluft, Kühlmittel oder Ähnlichem versorgt werden muß, wie beispielsweise bei einem Warentransportsystem in einem Hochregallager. Die Versorgungsleitungen sind in einer Energieführungskette aufgenommen, die an einem in einer festen Höhe angeordneten Anschluß beginnt und an der Maschine endet. Vom Anschluß aus hängt ein erster Abschnitt der Energieführungskette nach unten, während ein zweiter Abschnitt von der Maschine aus nach unten hängt. Beide Abschnitte sind durch einen gebogenen Abschnitt miteinander verbunden. Die Vorrichtung wird samt der Maschine in der Regel auch in horizontaler Richtung bewegt, wobei die Energieführungskette insbesondere beim Anfahren und beim Abbremsen in Schwingungen versetzt werden kann. Dabei kann sie zum einen gegen Einrichtungsgegenstände in der Umgebung schlagen, zum anderen können die beiden Abschnitte gegeneinander schlagen, was jeweils Schäden an der Energieführungskette und sogar an Einrichtungsgegenständen in ihrer Umgebung verursachen kann.

Aus der DE 10 2008 018 645 A1 ist eine Vorrichtung der eingangs genannten Art bekannt, bei der ein vertikal verlaufender Abschnitt einer Energieführungskette durch wippenartige mechanische Rückhaltemittel in einer Führungsrinne gehalten wird. Solche mechanischen Haltemittel sind aber störanfällig und können bei einem Defekt zu einem Festklemmen der Energieführungskette führen.

Aus der WO 2007/065 422 A1 ist eine Vorrichtung der eingangs genannten Art bekannt, bei der ein Abschnitt einer Energieführungskette zwischen dem Nordpol und dem Südpol einer permanentmagnetischen Führungsrinne in der Schwebe gehalten wird. Zu diesem Zweck ist die Energieführungskette mit einem ferromagnetischen Material versehen, das vom Nordpol und vom Südpol gleichermaßen angezogen wird. Dabei ist zum einen die Ausbildung der Führungsrinne über ihre gesamte Länge als Permanentmagnet kostenintensiv. Auch die Anordnung eines ferromagnetischen Materials an der Energieführungskette, die sich im Wesentlichen über deren gesamte Länge erstreckt, ist nachteilig, da die Energieführungskette als ständig bewegtes Bauteil dadurch ein unnötig hohes Gewicht erhält.

Es ist daher Aufgabe der Erfindung, eine Vorrichtung der eingangs genannten Art derart weiter zu entwickeln, dass sie einfacher aufgebaut ist.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, den vom feststehenden Anschluß herabhängenden ersten Abschnitt der Energieführungskette mittels der Haltemittel an der Führungseinrichtung festzuhalten, so dass zumindest dieser Abschnitt nicht oder nur erschwert in Schwingungen versetzt werden kann. Kann der erste Abschnitt nicht schwingen, so erschwert dies auch ein Schwingen des zweiten Abschnitts, so dass unerwünschte Bewegungen der Energieführungskette insgesamt verringert werden. Gemäß einer Weiterbildung der Erfindung ist eine weitere Führungseinrichtung für den zweiten Abschnitt der Energieführungskette vorgesehen. Die weitere Führungseinrichtung ist zumindest abschnittsweise baugleich mit der Führungseinrichtung für den ersten Abschnitt ausgebildet und im baugleichen Abschnitt bezüglich einer Mittelebene spiegelsymmetrisch zur Führungseinrichtung für den ersten Abschnitt angeordnet. Durch die weitere Führungseinrichtung wird auch das Schwingen des zweiten Abschnitts weiter erschwert.

Die Führungseinrichtung weist eine vertikal verlaufende Führungsleiste auf. Diese kann zusammen mit zwei im Abstand parallel zueinander verlaufenden Seitenführungselementen eine Führungswanne zur Aufnahme des ersten Abschnitts der Energieführungskette bilden. Die Führungswanne ist nach einer Seite hin offen, aus der der gebogene Abschnitt herausragt, während der erste Abschnitt vollständig oder zumindest zum größten Teil in ihr aufgenommen ist. Die Führungswanne weist dann zumindest abschnittsweise einen U-förmigen Querschnitt auf, wobei die Führungsleiste die Basis des U bildet, während die Seitenführungselemente die Schenkel des U bilden. Selbstverständlich können die Seitenführungselemente auch Unterbrechungen aufweisen, so dass die Führungswanne nur abschnittsweise einen U-förmigen Querschnitt aufweist.

Erfindungsgemäß sind die Haltemittel an Außenflächen der Energieführungskette angeordnete Magnete, und die Führungsleiste weist einen ferromagnetischen Werkstoff auf. Insbesondere kann die Führungsleiste aus Eisenblech gefertigt sein, so dass zwischen ihr und an der Energieführungskette angeordneten Permanentmagneten eine Anziehungskraft besteht. Die Magnete sind dabei zweckmäßig an Außenflächen des ersten Abschnitts angeordnet, die dem zweiten Abschnitt abgewandt sind. Zudem wird bevorzugt, dass die Magnete jeweils eine Kunststoffhülle aufweisen. Die Kunststoffhülle schützt zum einen das permanentmagnetische Material, zum anderen wirkt sie als Abstandshalter zum ferromagnetischen Werkstoff der Führungsleiste, der auch bei direkter Anlage am ferromagnetischen Werkstoff die Anziehungskraft begrenzt.

Es wird bevorzugt, dass die Magnete stets im Abstand zum ferromagnetischen Werkstoff der Führungsleiste angeordnet sind. Durch diese Maßnahme soll die Anziehungskraft zwischen der Energieführungskette und der Führungsleiste von vorneherein begrenzt werden, um die Beweglichkeit der Energieführungskette nicht nachteilig einzuschränken. Zweckmäßig weist die Führungsleiste eine Rinne zur Aufnahme der Magnete auf, an deren Boden der ferromagnetische Werkstoff angeordnet ist. Beiderseits der Rinne sind dann Anlageflächen angeordnet, gegen die der erste Abschnitt der Energieführungskette anliegt. Durch das Anliegen des ersten Abschnitts der Energieführungskette an den Anlageflächen wird das Eintauchen der Magnete in die Rinne räumlich begrenzt, so dass ein Mindestabstand zwischen den Magneten und dem ferromagnetischen Werkstoff vorgegeben ist. Um die Anziehungskraft variieren zu können, ist die Tiefe der Rinne gemäß einer vorteilhaften Ausführungsform variierbar.

Im Folgenden wird die Erfindung anhand der in der Zeichnung schematisch dargestellten Ausführungsbeispiele näher erläutert. Es zeigen
- Fig. 1a, 1b: eine Führungsvorrichtung gemäß einem ersten Ausführungsbeispiel in schematischer, perspektivischer Darstellung und im Längsschnitt
- Fig. 2a, 2b, 2c: eine Führungsvorrichtung gemäß einem zweiten Ausführungsbeispiel in drei verschiedenen Varianten, jeweils schematisch in Draufsicht;
- Fig. 3: eine Führungsvorrichtung gemäß einem dritten Ausführungsbeispiel in perspektivischer Darstellung und
- Fig. 4a, 4b: eine Führungsvorrichtung gemäß einem vierten Ausführungsbeispiel in perspektivischer Darstellung sowie in einer Detaildarstellung.

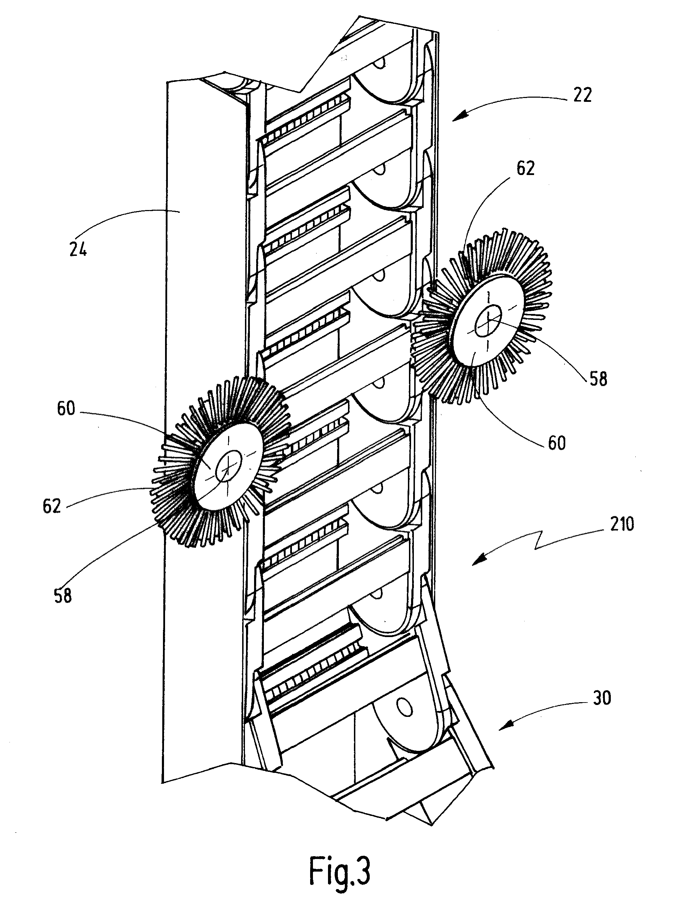

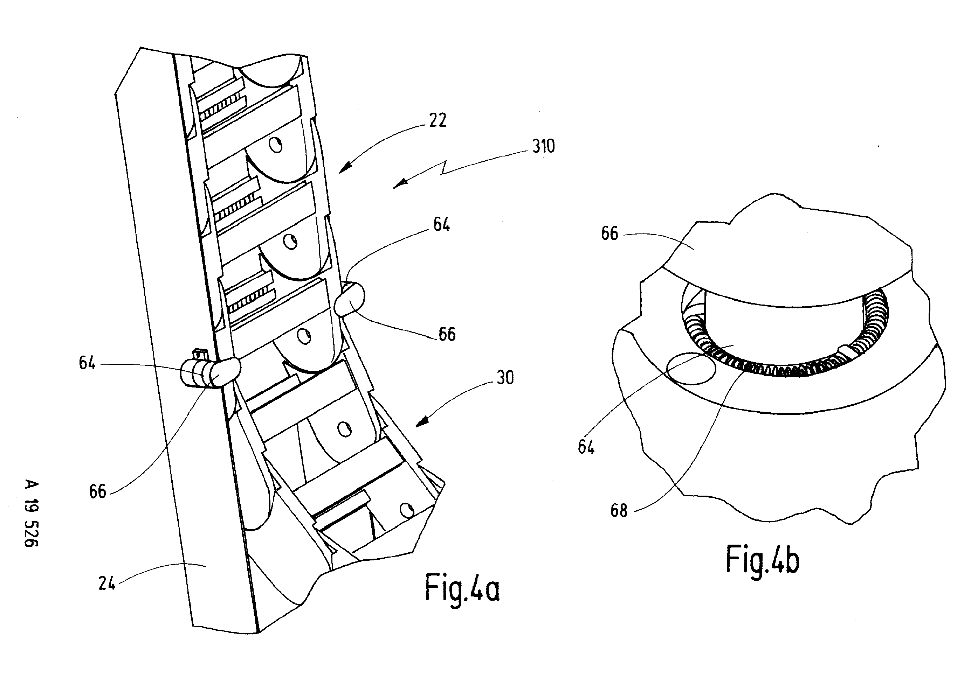

Im folgenden sind mehrere Ausführungsbeispiele einer Führungsvorrichtung beschrieben, die dazu dient, Versorgungsleitungen von einem in einer festen Höhe angeordneten Anschluß zu einer vertikal beweglichen Maschine zu führen. Die in der Zeichnung nicht dargestellten Versorgungsleitungen sind in einer Energieführungskette 12 aufgenommen, die aus mehreren, in einer Kettenlängsrichtung hintereinander angeordneten und gelenkig miteinander verbundenen Kettengliedern 14 aufgebaut ist. In allen Ausführungsbeispielen sind die Kettenglieder als aus im Abstand parallel zueinander verlaufenden Seitengliedern 16 sowie die Seitenglieder 16 miteinander verbindenden Rahmenstegen 18 aufgebaut, wobei die Seitenglieder 16 und die Rahmenstege 18 einen Führungskanal 20 umschließen, in den die Versorgungsleitungen eingesetzt werden können. Es können aber auch andere Arten von Energieführungsketten zum Einsatz kommen. Die Energieführungskette 12 schützt die Versorgungsleitungen vor äußeren Einwirkungen. In allen Ausführungsbeispielen ist ein von dem in fester Höhe angeordneten Anschluß herabhängender erster Abschnitt 22 der Energieführungskette in einer Führungswanne 24 aufgenommen. Die Führungswanne 24 weist zwei parallel im Abstand zueinander verlaufende Seitenführungselemente 26 sowie eine die Seitenführungselemente 26 miteinander verbindende Führungsleiste 28 auf und ist im Querschnitt im wesentlichen U-förmig und zu der gegenüber der Führungsleiste 28 liegenden Seite hin offen. Von der Maschine hängt ein zweiter Abschnitt der Energieführungskette herab, der nicht in der Führungswanne 24 aufgenommen ist. Der erste Abschnitt 22 und der zweite Abschnitt sind durch einen gebogenen Abschnitt 30 miteinander verbunden, wobei je nach Position der Maschine sich die Zugehörigkeit der einzelnen Kettenglieder 14 zum ersten Abschnitt 22, zum zweiten Abschnitt oder zum gebogenen Abschnitt 30 ändert. Der Einfachheit halber sind in den Zeichnungen die Maschine, der Anschluß und der zweite Abschnitt nicht dargestellt. Der gebogene Abschnitt 30 ist nur in Fig. 3 und in Fig. 4a jeweils angedeutet.

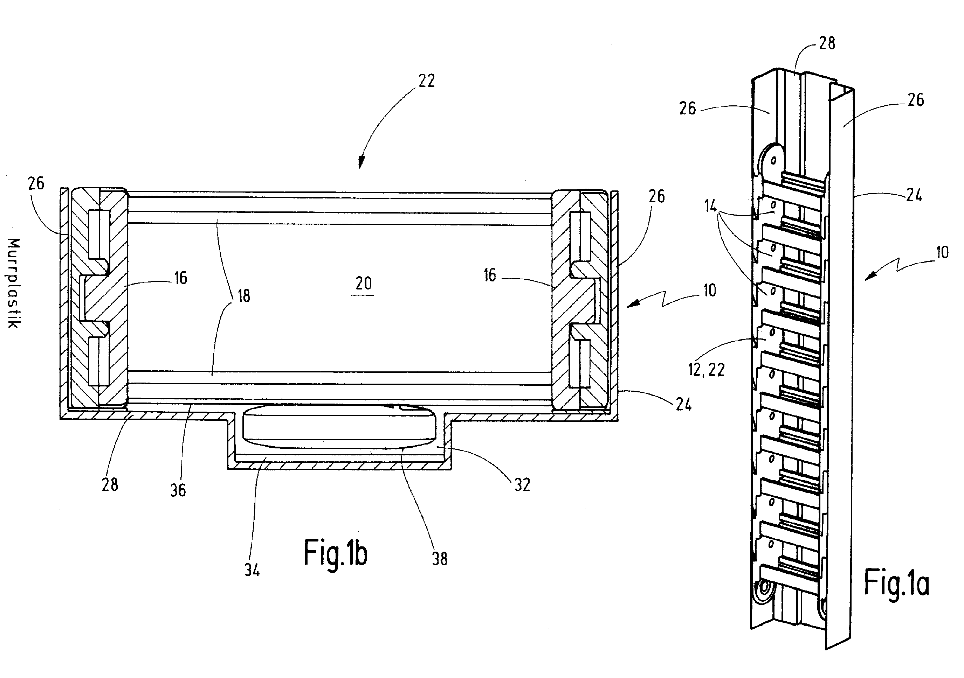

Gemäß dem in Fig. 1a, 1b dargestellten ersten Ausführungsbeispiel der Führungsvorrichtung 10 weist die Führungswanne 24 eine in die Führungsleiste 28 eingelassene Rinne 32 auf, in der eine Stahlplatte 34 angeordnet ist. Die Seitenführungselemente 26 und die Führungsleiste 28 sind aus Kunststoff gefertigt. Die Kettenglieder 14 sind an den Außenflächen 36 ihrer Rahmenstege 18 jeweils mit einem Permanentmagneten 38 versehen, der einen Kern aus einem permanentmgnetischen Material und einer den Kern umhüllende Kunststoffhülle aufweist und der in die Rinne 32 eintaucht, ohne die Stahlplatte 34 an deren Boden zu berühren. Vielmehr liegt die Energieführungskette 12 mit den Seitengliedern 16 ihrer Kettenglieder 14 nahe den Seitenführungselementen 26 an der Führungsleiste 28 an. Dabei ist zu beachten, dass, wie in Fig. 1a dargestellt, die Führungswanne 24 von oben nach unten verläuft und somit den vertikal herabhängenden ersten Abschnitt 22 aufnimmt, von dem der Einfachheit halber in Fig. 1a nur ein Abschnitt dargestellt ist. Sowohl die Seitenführungselemente 26 als auch die Führungsleiste 28 verlaufen somit vertikal. Die Anziehungskraft zwischen den Magneten 38 und der Stahlplatte 34 verhindert ein unbeabsichtigtes Entfernen des ersten Abschnitts 22 aus der Führungswanne 24, das beispielsweise dann auftreten könnte, wenn die Führungsvorrichtung 10 in horizontaler Richtung verfahren und dabei beschleunigt und abgebremst wird. Die Anordnung der Magnete 38 im Abstand zur Stahlplatte 34 erleichtert ein Entfernen der Kettenglieder 14 des ersten Abschnitts 22 aus der Führungswanne 24, wenn die mit dem zweiten Abschnitt verbundene Maschine nach oben gefahren wird. Es versteht sich von selbst, dass die Seitenführungselemente 26 nicht zwingend erforderlich sind. Zudem kann vorgesehen sein, dass die Tiefe der Rinne 32 variierbar ist, so dass die Anziehungskraft zwischen den Magneten 38 und der Stahlplatte 34 variiert werden kann.

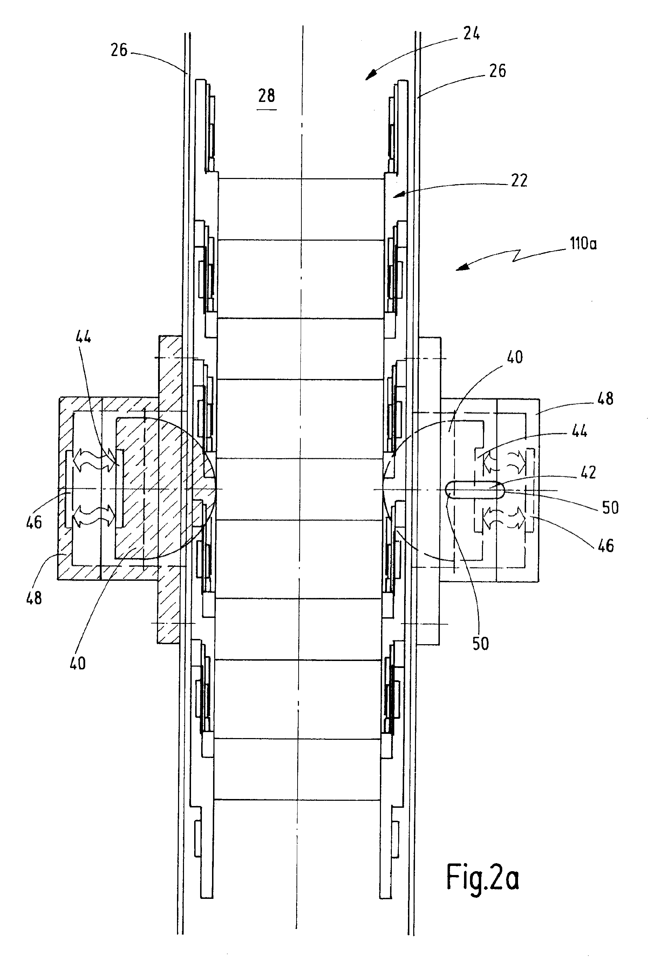

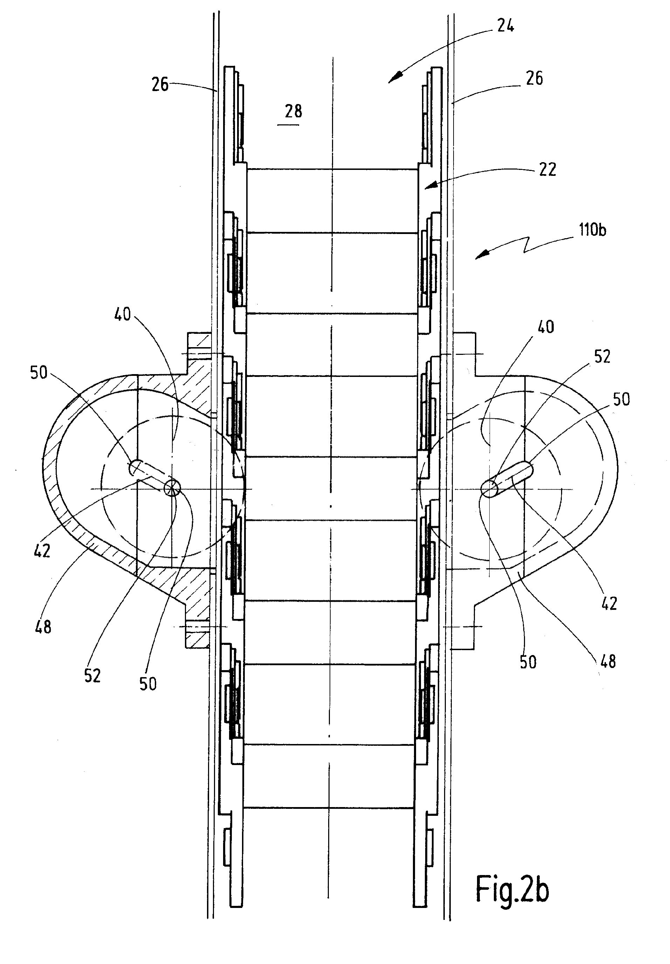

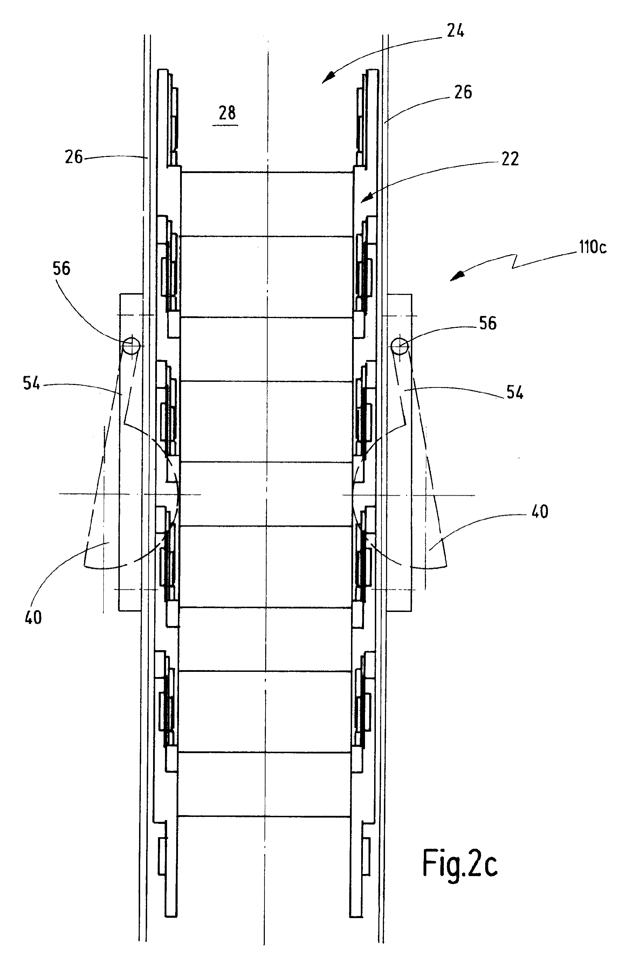

Die Führungsvorrichtung 110a, b, c gemäß dem zweiten Ausführungsbeispiel (Fig. 2a, b, c) greift auf ein anderes Prinzip zurück. Hier wird der erste Abschnitt 22 durch Reibschluß zwischen ihm und Bremskörpern 40 in der Führungswanne 24 gehalten. Die Bremskörper 40 sind dabei jeweils gegen eine Rückstellkraft beweglich an der Führungswanne 24 angeordnet und ragen seitlich durch die Seitenführungselemente 26 in diese hinein. Die Rückstellkraft bewirkt, dass die Bremskörper 40 gegen die Seitenglieder 16 des ersten Abschnitts 22 gedrückt werden. Indem die Bremskörper 40 paarweise auf gleicher Höhe angeordnet sind, wird der erste Abschnitt 22 zwischen ihnen eingeklemmt und durch die Reibungskraft in der Führungswanne 24 gehalten. Dabei ist es möglich, dass nur zwei Bremskörper 40 einander gegenüberliegend auf gleicher Höhe an der Führungswanne 24 angeordnet sind. Es ist jedoch auch möglich, dass mehrere Bremskörper 40 in unterschiedlichen Höhen angeordnet sind.

Gemäß der in Fig. 2a dargestellten ersten Variante sind die Bremskörper 40 in Führungskulissen 42 geführt. Sie weisen die Form von Scheiben auf und sind auf der in die Führungswanne 24 ragenden Seite jeweils halbkreisförmig ausgebildet. Jeder Bremskörper 40 ist mit einem Permanentmagneten 44 versehen, der von einem fest mit der Führungswanne 24 verbundenen weiteren Permanentmagneten 46 abgestoßen wird, so dass die Magnete 44, 46 die Rückstellkraft aufbringen. In Fig. 2a sind der links dargestellte Bremskörper 40 sowie ein ihn aufnehmendes Gehäuse 48 im Schnitt dargestellt, während der rechts dargestellte Bremskörper 40 lediglich gestrichelt angedeutet ist. Die Position der Bremskörper 40 entspricht der Position, die sie einnehmen, wenn der erste Abschnitt 22 aus der Führungswanne 24 entfernt ist. Die Führungskulissen 42 weisen zu diesem Zweck Endanschläge 50 auf, die so angeordnet sind, dass die Bremskörper 40 höchstens mit einem Teil ihrer halbkreisförmig ausgebildeten Seite in die Führungswanne 24 eintauchen. Wird die Energieführungskette 12 an der Position der Bremskörper 40 wieder in die Führungswanne 24 eingeführt, so verdrängt sie die Bremskörper 40 entgegen der Rückstellkraft, was durch die Abrundung an den in die Führungswanne 24 hinein ragenden Seiten erleichtert wird.

Bei der Ausführungsvariante gemäß Fig. 2b sind die Bremskörper 40 jeweils als Kreisscheiben ausgebildet. Die Darstellung entspricht der Darstellung in Fig. 2a, wobei aber beide Bremskörper 40 nur gestrichelt gezeichnet sind. Die Führungskulissen 42 fallen schräg zur Führungswanne 24 hin ab, so dass die in ihnen aufgenommenen, aus den kreisscheibenförmigen Bremskörpern 40 aus deren Mittelachsen vorstehenden Zapfen 52 aufgrund der Schwerkraft der Bremskörper 40 die Führungskulissen 42 hinunter gleiten, bis sie am ersten Abschnitt 22 der Energieführungskette 12 anliegen. Die Rückstellkraft wird durch die Schwerkraft aufgebracht. Die Endanschläge 50 sind wiederum so angeordnet, dass die Bremskörper stets mit weniger als der Hälfte ihres Umfangs in die Führungswanne 24 hineinragen.

Bei der dritten Ausführungsvariante gemäß Fig. 2c sind die Bremskörper 40 an den Enden eines einarmigen Hebels 54 angeordnet, der um eine Schwenkachse 56 verschwenkbar an der Führungswanne 24 angelenkt ist. Hier ist es wiederum die Schwerkraft, die die Bremskörper 40 gegen den ersten Abschnitt 22 der Energieführungskette 12 drückt.

Gemäß dem dritten Ausführungsbeispiel der Führungsvorrichtung 210 (Fig. 3) sind an der Führungswanne 24 beiderseits auf gleicher Höhe um jeweils eine Drehachse 58 drehbare Träger 60 angeordnet, von denen elastisch biegsame Borsten 62 radial abstehen und teilweise die offene Seite der Führungswanne 24 überdecken. Werden die auf der Höhe der Borsten 62 angeordneten Kettenglieder 14 aus der Führungswanne 24 entfernt, so erfolgt dies gegen die von den elastischen Borsten 62 aufgebrachte Rückstellkraft. Die Borsten 62 werden elastisch verformt und nehmen nach dem Entfernen der Kettenglieder 14 aus der Führungswanne 24 wieder ihre ursprüngliche Position ein. Dasselbe gilt für das Wiedereinfügen der Kettenglieder 14 auf der Höhe der Borsten 62. Die Drehbarkeit der Träger 60 um die Drehachsen 58 erleichtert das Herausnehmen und Wiedereinfügen der Kettenglieder 14.

Gemäß dem vierten Ausführungsbeispiel der Führungsvorrichtung 310 (Fig. 4a, 4b) sind einander auf gleicher Höhe gegenüberliegende, um jeweils eine Schwenkachse 64 verschwenkbare Arme 66 an der Führungswanne 24 angeordnet. Diese ragen ein Stück weit über die offene Seite der Führungswanne 24. Ein Verschwenken um die Schwenkachse 64 erfolgt gegen die Rückstellkraft einer Feder 68, wobei ein Verschwenken in beiden Drehrichtungen möglich ist. Werden die auf der Höhe der Schwenkachsen 64 angeordneten Kettenglieder 14 aus der Führungswanne 24 entfernt, so werden die Arme 66 gegen die Rückstellkraft der Federn 68 in die eine Schwenkrichtung verschwenkt und nehmen anschließend wieder ihre ursprüngliche Position ein. Beim Wiedereinführen der Kettenglieder 14 in die Führungswanne 24 auf der Höhe der Schwenkachsen 64 werden die Arme 66 um die Schwenkachsen 64 gegen die Rückstellkraft der Federn 68 in der anderen Schwenkrichtung verschwenkt und nehmen anschließend wieder ihre ursprüngliche Position über den Seitengliedern 16 ein.

### Zusammenfassend ist folgendes festzuhalten:

Die Erfindung betrifft eine Vorrichtung 10, 110a, 110b, 110c, 210, 310 zur Führung von Versorgungsleitungen von einem in einer festen Höhe angeordneten Anschluß zu einer vertikal beweglichen Maschine, mit einer Energieführungskette 12, in der die Versorgungsleitungen aufgenommen und zumindest teilweise umschlossen sind, wobei die Energieführungskette 12 eine Vielzahl von gelenkig miteinander verbundenen, in einer Kettenlängsrichtung hintereinander angeordneten Kettengliedern 14 aufweist, und wobei die Energieführungskette 12 einen vom Anschluß herabhängenden ersten Abschnitt 22 und einen von der Maschine herabhängenden zweiten Abschnitt aufweist, welche durch einen gebogenen Abschnitt 30 miteinander verbunden sind. Erfindungsgemäß ist eine Führungseinrichtung vorgesehen, die mindestens ein vertikal verlaufendes Führungselement 28 für den ersten Abschnitt 22 der Energieführungskette 12 aufweist, und es sind Haltemittel 38, 40, 62, 66 vorgesehen, die dem Entfernen des ersten Abschnitts 22 vom Führungselement 28 eine Rückhaltekraft entgegen bringen.

## Patentansprüche

1. Vorrichtung zur Führung von Versorgungsleitungen von einem in einer festen Höhe angeordneten Anschluß zu einer vertikal beweglichen Maschine, mit einer Energieführungskette (12), in der die Versorgungsleitungen aufgenommen und zumindest teilweise umschlossen sind, wobei die Energieführungskette (12) eine Vielzahl von gelenkig miteinander verbundenen, in einer Kettenlängsrichtung hintereinander angeordneten Kettengliedern (14) aufweist, und wobei die Energieführungskette (12) einen vom Anschluß herabhängenden ersten Abschnitt (22) und einen von der Maschine herabhängenden zweiten Abschnitt aufweist, welche durch einen gebogenen Abschnitt (30) miteinander verbunden sind, mit einer Führungseinrichtung, die mindestens ein vertikal verlaufendes Führungselement (28) für den ersten Abschnitt (22) der Energieführungskette (12) aufweist, und mit Haltemitteln (38), die dem Entfernen des ersten Abschnitts (22) vom Führungselement (28) eine Rückhaltekraft entgegen bringen, wobei die Führungseinrichtung eine vertikal verlaufende Führungsleiste (28) aufweist, **dadurch gekennzeichnet, dass** die Haltemittel an Außenflächen (36) der Energieführungskette (12) angeordnete Magnete (38) sind, und dass die Führungsleiste (28) einen ferromagnetischen Werkstoff (34) aufweist.

2. Vorrichtung nach Anspruch 1, **dadurch gekennzeichnet, dass** die Führungseinrichtung zwei im Abstand parallel zueinander verlaufende, mittels der Führungsleiste (28) miteinander verbundene und mit der Führungsleiste (28) eine Führungswanne (24) zur Aufnahme des ersten Abschnitts (22) bildende Seitenführungselemente (26) aufweist.

3. Vorrichtung nach Anspruch 1 oder 2, **dadurch gekennzeichnet, dass** die Magnete (38) jeweils eine Kunststoffhülle aufweisen.

4. Vorrichtung nach einem der vorangehenden Ansprüche, **dadurch gekennzeichnet, dass** die Magnete (38) stets im Abstand zum ferromagnetischen Werkstoff (34) der Führungsleiste (28) angeordnet sind.

5. Vorrichtung nach einem der vorangehenden Ansprüche, **dadurch gekennzeichnet, dass** die Führungsleiste (28) eine Rinne (32) zur Aufnahme der Magnete (38) aufweist, an deren Boden der ferromagnetische Werkstoff (34) angeordnet ist, sowie beiderseits der Rinne (32) angeordnete Anlageflächen, gegen die der erste Abschnitt (22) anliegt.

6. Vorrichtung nach Anspruch 5, **dadurch gekennzeichnet, dass** die Tiefe der Rinne (32) variierbar ist.

7. Vorrichtung nach einem der vorangehenden Ansprüche, **gekennzeichnet durch** eine weitere Führungseinrichtung für den zweiten Abschnitt der Energieführungskette (12), die zumindest abschnittsweise baugleich mit der Führungseinrichtung für den ersten Abschnitt (22) ausgebildet ist und bezüglich einer Mittelebene spiegelsymmetrisch zu dieser angeordnet ist.

## Claims

1. Device to guide supply lines from a connection set at a fixed height to a vertically adjustable machine, with a cable drag chain (12) in which the supply lines are gathered and at least partially enclosed; whereby the cable drag chain (12) comprises a number of interconnected chain links (14) arranged lengthwise, and whereby the cable drag chain (12) comprises one section (22) suspended from the connection, and a second section suspended from the machine, which two are interconnected by a curved section (30) with a guiding mechanism, which comprises at least one vertically-running guiding element (28) for the first section (22) of the cable drag chain (12), and fastenings (38) applying a force against the tendency of the first section (22) to move away from the guiding element (28); whereby the guiding mechanism comprises a vertically-running guide rail (28), **characterised in that** the fastenings on the outer surfaces (36) of the cable drag chain (12) are magnets (38), and that the guide rail (28) comprises a ferromagnetic material (34).

2. Device according to Claim 1, **characterised in that** the guiding mechanism comprises two separate lateral guiding elements (26) running parallel to each other, joined together by means of the guide rail (28) and, with the guide rail (28), forming a guiding trough (24) to accommodate the first section (22).

3. Device according to Claim 1 or 2, **characterised in that** the magnets (38) each comprise a plastic cover.

4. Device according to any one of the preceding claims, **characterised in that** the magnets (38) are always in a position separated from the ferromagnetic material (34) of the guiding rail (28).

5. Device according to any one of the preceding claims, **characterised in that** the guiding rail (28) comprises a groove (32) into which the magnets (38) fit, to the underside of which the ferromagnetic material (34) is fitted, and to which, on both sides, contact surfaces are arranged to fit the first section (22).

6. Device according to claim 5, **characterised in that** the depth of the groove (32) is adjustable.

7. Device according to any one of the preceding claims, **characterised by** another guiding mechanism for the second section of the cable drag chain (12), which, section by section at least, is designed to be identical in manufacture to the guiding mechanism for the first section (22), and is symmetrically arranged thereto about a central plane.

## Revendications

1. Dispositif destiné au guidage de câbles d'alimentation électrique depuis un branchement disposé à une hauteur fixe jusqu'à une machine verticalement mobile, avec une chaîne de guidage d'énergie (12), dans laquelle les câbles d'alimentation sont reçus et au moins partiellement enfermés, sachant que la chaîne de guidage d'énergie (12) présente un grand nombre de maillons de chaîne (14) disposés les uns à la suite des autres dans une direction longitudinale de la chaîne et reliés entre eux de manière articulée, et sachant que la chaîne de guidage d'énergie (12) présente un premier tronçon (22) qui pend du branchement et un deuxième tronçon qui pend de la machine, qui sont reliés entre eux par un tronçon courbe (30), avec un système de guidage qui présente au moins un élément de guidage (28) s'étendant verticalement pour le premier tronçon (22) de la chaîne de guidage d'énergie (12), et avec des moyens de maintien (38) qui opposent une force de retenue pour empêcher le premier tronçon (22) de s'éloigner de l'élément de guidage (28), sachant que le système de guidage présente une barre de guidage (28) s'étendant verticalement, **caractérisé en ce que** les moyens de maintien sont des aimants (38) disposés sur des surfaces extérieures (36) de la chaîne de guidage d'énergie (12), et **en ce que** la barre de guidage (28) présente un matériau ferromagnétique (34).

2. Dispositif selon la revendication 1, **caractérisé en ce que** le système de guidage présente deux éléments de guidage latéraux (26) s'étendant à distance parallèlement entre eux, reliés entre eux au moyen de la barre de guidage (28) et formant avec la barre de guidage (28) une cuvette de guidage (24) pour recevoir le premier tronçon (22).

3. Dispositif selon la revendication 1 ou 2, **caractérisé en ce que** les aimants (38) présentent chacun une enveloppe en matière plastique.

4. Dispositif selon l'une des revendications précédentes, **caractérisé en ce que** les aimants (38) sont disposés constamment à distance du matériau ferromagnétique (34) de la barre de guidage (28).

5. Dispositif selon l'une des revendications précédentes, **caractérisé en ce que** la barre de guidage (28) présente une rainure (32) destinée à recevoir les aimants (38) et sur le fond de laquelle est disposé le matériau ferromagnétique (34), ainsi que des surfaces de contact disposées de part et d'autre de la rainure (32), contre lesquelles s'applique le premier tronçon (22).

6. Dispositif selon la revendication 5, **caractérisé en ce que** la profondeur de la rainure (32) est variable.

7. Dispositif selon l'une des revendications précédentes, **caractérisé par** un autre système de guidage pour le deuxième tronçon de la chaîne de guidage d'énergie (12), qui est réalisé au moins pour partie de construction identique au système de guidage pour le premier tronçon (22) et qui est disposé symétriquement à celui-ci par rapport à un plan médian.
